(19) Europäisches Patentamt European Patent Office Office européen des brevets

(11) **EP 4 475 074 A1**

(12) **EUROPEAN PATENT APPLICATION**
published in accordance with Art. 153(4) EPC

(43) Date of publication:
**11.12.2024 Bulletin 2024/50**

(21) Application number: **24709288.5**

(22) Date of filing: **06.02.2024**

(51) International Patent Classification (IPC):
***G06T 7/00*** (2017.01)

(52) Cooperative Patent Classification (CPC):
**Y02E 60/10**

(86) International application number:
**PCT/CN2024/076285**

(87) International publication number:
**WO 2024/222145 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 CN 202310461594**

(71) Applicants:
• **Xiamen Weiya Intelligent Technology Co., Ltd**
**Huli District**
**Xiamen, Fujian 361000 (CN)**

• **Xiamen Vitu Software Technology Co., Ltd**
**Xiamen, Fujian 361000 (CN)**

(72) Inventors:
• **CHEN, Yu**
**Xiamen, Fujian 361000 (CN)**
• **LIN, ZengMin**
**Xiamen, Fujian 361000 (CN)**

(74) Representative: **Chung, Hoi Kan**
**Mandarin IP Limited**
**7 Cherry Trees**
**Great Shelford**
**Cambridge CB22 5XA (GB)**

(54) **ABNORMALITY DETECTION METHOD FOR LONG SURFACE OF BLADE LITHIUM BATTERY HOUSING**

(57) Disclosed is a method for detecting an abnormality of an elongated surface of a case of a blade lithium battery, including the following steps: S1: acquiring an image of the elongated surface of the blade lithium battery, pre-processing the image into a sub-image, and constructing a data set; S2 selecting defected images in the data set as a test set, and selecting normal images as a training set; S3: inputting the training set into a feature extraction model to obtain a feature vector; S4: inputting the extracted feature vector into a FastFlow model for training to obtain a normalized flow model; S5: inputting the images in the training set into the normalized flow model, calculating maximum values and minimum values of all converted feature image pixel values and storing the maximum values and minimum values; S6: arbitrarily selecting a sub-image from the test set, and inputting the sub-image into the model to obtain an abnormality score; and S7: comparing the abnormality score with a set threshold, and judging whether the image is abnormal. The present invention has a good effect to detect abnormalities of the elongated surface of the case of the blade lithium battery.

Acquire an image of the elongated surface of the blade lithium battery, pre-process the image into a sub-image, and construct a data set — S1

Select defected images in the data set as a test set, and select normal images as a training set — S2

Input the training set into a feature extraction model to obtain a feature vector — S3

Input the extracted feature vector into a FastFlow model for training to obtain a normalized flow model — S4

Input the images in the training set into the normalized flow model, calculate maximum values and minimum values of all converted feature image pixel values and store the maximum values and minimum values — S5

Arbitrarily select a sub-image from the test set, inputting the sub-image into the feature extraction model and the FastFlow model, and perform normalization processing on a finally outputted feature graph and the previously calculated maximum values and minimum values to obtain an abnormality score — S6

Compare the abnormality score with a set threshold, and judge whether the image is abnormal — S7

FIG. 1

## Description

## TECHNICAL FIELD

The present invention relates to the field of industrial defect detection, and particularly relates to a method for detecting an abnormality of an elongated surface of a case of a blade lithium battery.

## BACKGROUND

As a new energy battery type, a blade lithium battery is one of mainstream battery types in the field of electric automobiles at present and features a high energy-volume ratio, as well as relatively safer and easier to assemble. The production process of lithium battery is lengthy and comprises many processing steps, and its production environment is relatively complicated. There may be defects such as pinholes, pits, explosion points, bumps and scratches on a surface of a case of the lithium battery occurred due to production process. These defects not only affect the quality of battery products and cause losses to the battery manufacturers, but because of the electrochemical discharge property of the lithium battery, they may even cause safety accidents such as ignition as a result of severe defects, resulting in risk to the safety of personnel and property. In the blade lithium battery, the area of the elongated surface of the case occupies the largest portion of the outer surface of the battery, and therefore, it appears to be particularly important to detect an abnormality of the elongated surface of the case of the battery. A conventional detection method is a defect detection method based on images and features a high speed and high interpretability.

In addition, with the development of the artificial intelligence technology, the deep learning technology can also be used in defect detection, so that the precision of the defect detection method based on images is greatly improved. However, in an actual production environment, because there are welding residues such as welding spikes and welding slag in a battery production process, the defects are ever-changing in shape. A model cannot learn features of all the defects, so that there is a problem that some defects are not detected.

Prior art defect detection methods pay more attention to the features of the defects themselves and neglects the overall distribution features. In a case of a small data size, owing to fewer defect features, a more satisfactory result can be achieved. However, in a case of a large data size, the resulting defect types accordingly increase. If the models are not updated, the generalization performance of the model is poor, which is likely to cause missed detection; when the data size increases, the workload of annotation increases accordingly, which not only increases the complexity of the model, but also increases the workload of an iterative model; because the elongated surface of the case of the blade lithium battery is usually divided into an elongated side surface and a substantial surface, a single surface is in an elongated and narrow shape in image, and the number of pixels in an effective area accounts for a small proportion of total image pixels, which is harmful to training and reasoning the model.

## SUMMARY

An object of the present invention is to provide a method for detecting an abnormality of an elongated surface of a case of a blade lithium battery, which can better solve the problem of detecting the abnormality of the elongated surface of the case of the blade lithium battery.

To achieve the above object, the present invention adopts the following technical solution: a method for detecting an abnormality of an elongated surface of a case of a blade lithium battery includes the following steps:

S1: acquiring an image of the elongated surface of the blade lithium battery, pre-processing the image into a sub-image, and constructing a data set;
S2 selecting defected images in the data set as a test set, and selecting normal images as a training set;
S3: inputting the training set into a feature extraction model to obtain a feature vector;
S4: inputting the extracted feature vector into a FastFlow model for training to obtain a normalized flow model;
S5: inputting the images in the training set into the normalized flow model, calculating maximum values and minimum values of all converted feature image pixel values and storing the maximum values and minimum values;
S6: arbitrarily selecting a sub-image from the test set, inputting the sub-image into the feature extraction model and the FastFlow model, and performing normalization processing on a finally outputted feature graph and the previously calculated maximum values and minimum values to obtain an abnormality score; and
S7: comparing the abnormality score with a set threshold, and judging whether the image is abnormal;
where the step S1 adopts an adaptive image segmentation method, and the image of the elongated surface of the case of the battery is segmented into a plurality of square sub-images;
the feature extraction model in the step S3 comprises a deep residual network model ResNet-18 as a backbone network; and

the FastFlow model adopted in the steps S4 and S6 is constructed based on a normalizing flow model.

As a preferred solution, in the step S1, the image of the elongated surface of the blade lithium battery is divided into a substantial surface and an elongated side surface, and the substantial surface and the elongated side surface are respectively pre-processed into sub-images and are used to construct the respective data sets.

As a preferred solution, defected sub-images are selected from the two data sets constructed in S1 as the test set, and normal images are used as the training set, wherein only normal image samples are used in training.

As a preferred solution, because there is a distinct boundary between a surface of the case of the battery and an ambient environment, the boundary of the battery can be separated by a threshold method relating to the distinct boundary between the surface of the case of the battery and an ambient environment; the threshold method comprises: subjecting the image to grayscale processing, and converting the image into a grayscale image; setting pixels of a non-battery area as zero according to a boundary threshold; and determining an effective area of the battery based on corresponding pixel values.

As a preferred solution, the adaptive image segmentation method in the step S1 includes: creating a sliding window with a height equal to a width of the effective area of the battery; traversing, by the sliding window, a sliding area to calculate a width of an effective area of the battery in the sliding window; taking the width as a height of a next sliding window; and furthermore, modifying a moving value of the sliding window, and performing continuous iterative traversing until the whole image is traversed.

As a preferred solution, an algorithm for calculating the width is as follows:

$$w = w_{r\_i} - w_{l\_i}$$

where $w_{r\_i}$ represents a coordinate of a first column of x with the pixel value greater than more than 1/3 of a total amount of the boundary thresholds in each column of pixels from right to left in the sliding window, $w_{l\_i}$ represents a coordinate of a first column of x with the pixel value greater than more than 1/3 of a total amount of the boundary thresholds in each column of pixels from left to right in the sliding window, wherein the width of the effective area being obtained by subtracting the two values; whereby the width is used as the height of the next sliding window; and wherein the method further comprises modifying moving value of the sliding window such that the height of the sliding window covers a lower edge of a previous window using the formula:

$$h_{\text{slice}} = w * (1 - e_{\text{overlap}})$$

where $h_{\text{slice}}$ represents a value when the sliding window moves once, and $e_{\text{overlap}}$ represents a proportion at which the previous sliding window is covered. The proportion in the embodiment is set as 0.01, the above operation is repeated and iterated, to successively traverse the sliding window downwardly to a lower edge of the image to complete pre-processing of the image; that is, a plurality of square-shaped sub-images are generated with an edge of each sub-image equal to the effective width calculated by one sliding window and the height of the next sliding window, and of course, the two are completely equal, so that the sub-image is a square image.

As a preferred solution, the feature extraction model in the step S3 comprises the deep residual network model ResNet-18 as the backbone network, and outputs of a first network block, a second network block, and only a third network block of the deep residual network model ResNet-18 are used.

As a preferred solution, in the FastFlow mode used in the steps S4 and S6, a plurality of coupling layers are integrated to form a more complete generator, where a combinatory continuous transformation formula of the generator is as follows:

$$X \xrightarrow{f_1} H_1 \xrightarrow{f_2} H_2 \xrightarrow{f_3} H_3 \dots \xrightarrow{f_K} Z$$

$$X \xleftarrow{f_2^{-1}} H_1 \xleftarrow{f_2^{-1}} H_2 \xleftarrow{f_3^{-1}} H_3 \dots \xleftarrow{f_K^{-1}} Z$$

where X represents an original probability distribution function of the data, Z represents a probability distribution function of the data after transformation, H represents a probability distribution function in a transformation process, f represents a single block coupling layer, subscripts 1-K represent numbers of times of transformation, and $f^{-1}$ represents an inverse function of f.

As a preferred solution, in the step S6, a sub-image is arbitrarily selected from the test set, the sub-image is inputted into the feature extraction model and the FastFlow model, and normalization processing is performed on the finally outputted feature graph and the previously calculated maximum values and minimum values to obtain the abnormality score.

As a preferred solution, in the step S7, the abnormality score is compared with the set threshold to judge whether the image is abnormal; and the abnormality score is compared with the set threshold, the image with the abnormality score greater than the set threshold is an abnormal image, and the image with the abnormality score less than the set threshold is a normal image.

By adopting the above-mentioned solution, the present invention has the following beneficial effects:

1. Only the normal samples are used in training and data of detected abnormal signals is judged as defect images. Because the normal samples have relatively consistent features on the image and are of the same type, without interference by different types of data, the missed detection caused by different defect features can be avoided, and the iteration speed of the model is also be increased.

2. By adopting the adaptive image segmentation method, the image of the elongated surface of the case of the battery is segmented into the plurality of square sub-images, so that on the one hand, the data can be kept at a same specification, and on the other hand, the area of the effective area in the image can be increased, and abnormities at the battery surface with the elongated and narrow shape on the image can also be detected.

**BRIEF DESCRIPTION OF DRAWINGS**

FIG. 1 is a schematic diagram of steps of an algorithm in the present invention;
FIG. 2 is a flow diagram of training and testing stages in the present invention;
FIG. 3 is a schematic diagram of a structural diagram of ResNet-18; and
FIG. 4 is a training flow diagram in the present invention.

**DESCRIPTION OF EMBODIMENTS**

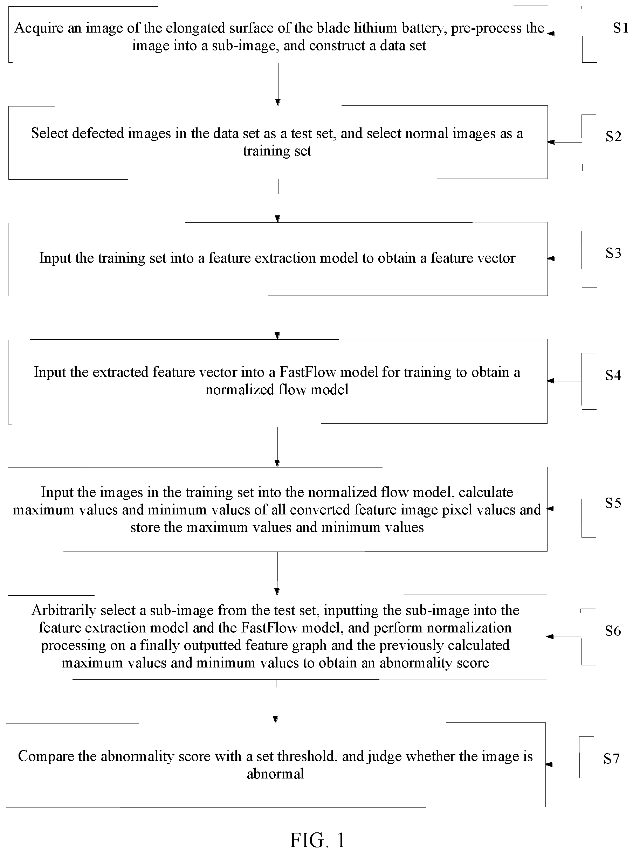

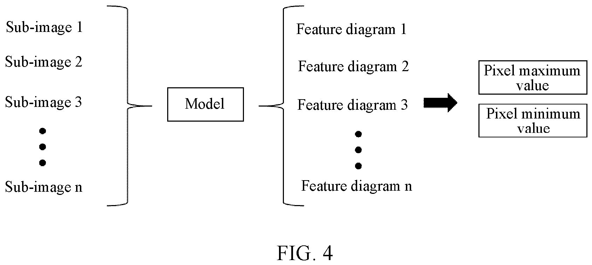

The present invention will be described in detail below in combination with FIGs. 1-4 and specific embodiments.

The present invention provides a method for detecting an abnormality of an elongated surface of a case of a blade lithium battery, including the following steps:

S1: acquiring an image of the elongated surface of the blade lithium battery, pre-processing the image into a sub-image, and constructing a data set;

S2 selecting defected images in the data set as a test set, and selecting normal images as a training set;

S3: inputting the training set into a feature extraction model to obtain a feature vector;

S4: inputting the extracted feature vector into a FastFlow model for training to obtain a normalized flow model;

S5: inputting the images in the training set into the normalized flow model, calculating maximum values and minimum values of all converted feature image pixel values and storing the maximum values and minimum values;

S6: arbitrarily selecting a sub-image from the test set, inputting the sub-image into the feature extraction model and the FastFlow model, and performing normalization processing on a finally outputted feature graph and the previously calculated maximum values and minimum values to obtain an abnormality score; and

S7: comparing the abnormality score with a set threshold, and judging whether the image is abnormal;

With respect to the step S 1, the image of the elongated surface of the blade lithium battery is divided into a substantial surface and an elongated side surface, and images of the substantial surface and the elongated side surface are respectively pre-processed and are used to construct the respective data sets.

With respect to the step S2, defected sub-images are selected from the two data sets constructed in S1 as the test set, and normal images are used as the training set wherein only normal image samples are used in training.

An adaptive image segmentation method is adopted in the pre-processing stage to segment the image of the elongated surface of the case of the battery into a plurality of square sub-images. For a given elongated surface image, it is imaged in a vertical strip shape. Because there is a distinct boundary between a surface of the case of the battery and an ambient environment, the boundary of the battery can be separated by a threshold method relating to the distinct boundary between the surface of the case of the battery and an ambient environment; the threshold method comprises: subjecting the image to grayscale processing, and converting the image into a grayscale image; setting pixels of a non-battery area as zero according to a boundary threshold; and determining an effective area of the battery based on corresponding pixel values.

First, acquiring a height of an initial sliding window: a center point of the image is selected, pixel values are traversed from left to right in the pixel row of the center point and are compared with the boundary threshold, to obtain a width of the effective area of the battery, a sliding window is created, and the width is used as the height of the initial sliding window.

The initial sliding window slides from left to right, the pixels in the sliding area are traversed, the width of the effective area in the sliding window is calculated, the sliding window moves downwards to become a next sliding window after traversing of the sliding window, and the width of the effective area calculated by the previous sliding window is used as a height of the next sliding window.

an algorithm for calculating the width is as follows:

$$w = w_{r\_i} - w_{l\_i}$$

where $w_{r\_i}$ represents a coordinate of a first column of x with the pixel value greater than more than 1/3 of a total amount of the boundary thresholds in each column of pixels from right to left in the sliding window, $w_{l\_i}$ represents a coordinate of a first column of x with the pixel value greater than more than 1/3 of a total amount of the boundary thresholds in each column of pixels from left to right in the sliding window. The width of the effective area being obtained by subtracting the two values; the width is used as the height of the next sliding window; and furthermore, the method further comprises modifying the moving value of the sliding window, such that the height of the sliding window covers a lower edge of a previous window using the formula:

$$h_{\text{slice}} = w * (1 - e_{\text{overlap}})$$

where $h_{\text{slice}}$ represents a value when the sliding window moves once, and $e_{\text{overlap}}$ represents a proportion at which the previous sliding window is covered. The proportion in the embodiment is set as 0.01, the above operation is repeated and iterated to successively traverse the sliding window downwardly to a lower edge of the image to complete pre-processing of the image; that is, a plurality of square-shaped sub-images are generated with an edge of each sub-image equal to the effective width calculated by one sliding window and the height of the next sliding window, and of course, the two are completely equal, so that the sub-image is a square image.

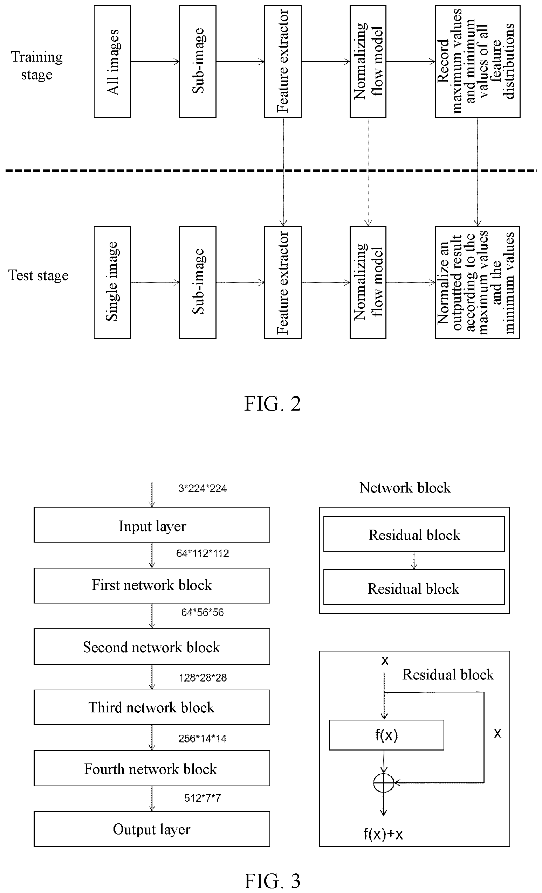

With respect to the step S3, the feature extraction model uses a deep residual network model ResNet-18 as a backbone network. An original structure of ResNet-18 is shown in FIG. 3, including an input layer, a first network block, a second network block, a third network block, a fourth network block and an output layer, where each network block includes two layers of residual network blocks. A number of convolution kernels in the input layer is 64, a width of the convolution kernels is 7, a height of the convolution kernels is 7, a step size is 2, a filling is 1, and an activation function is a Leaky Relu function; the first network block includes one $3\times3$ max-pooling layer and two residual blocks with a channel number of 64, where an output is a 64-dimensional vector; the second network block includes 64 $3\times3$ convolution kernels and two residual blocks with a channel number of 128, where an output is a 128-dimensional vector; the third network block includes 128 $3\times3$ convolution kernels and two residual blocks with a channel number of 256, where an output is a 256-dimensional vector; the fourth network block includes 256 $3\times3$ convolution kernels and two residual blocks with a channel number of 512, where an output is a 512-dimensional vector; and an output layer includes a mean-pooling layer and a fully connected layer.

In the embodiment, outputs of only the first network block, the second network block and the third network block are used, and are respectively inputted into corresponding FastFlow models to improve the global feature extraction capacity of the model.

With respect to the step S4, the FastFlow model used in the embodiment is constructed based on a normalizing flow model which is essentially a variable transformation algorithm. Letting the original image to comply with x distribution, the original image can be converted into z distribution by means of a normalizing flow transformation method, as shown in the following equation:

$$x = g(z) \Leftrightarrow z = f(x)$$

x and z are interconvertible. Its main flow is as follows: assuming distribution of z complies with normal distribution, the probability distribution function shown below can be obtained.

$$q(z) = \frac{1}{(2\pi)^{D/2}} exp\left(-\frac{1}{2}\|z\|^2\right)$$

z is replaced by a function dependent on x. As shown in the following equation, $det\left[\frac{\partial f}{\partial x}\right]$ represents a Jacobian matrix, $\left|det\left[\frac{\partial f}{\partial x}\right]\right|$ represents an absolute value of the Jacobian matrix, and D represents a number of data.

$$q(x) = \frac{1}{(2\pi)^{D/2}} exp\left(-\frac{1}{2}\|f(x)\|^2\right)\left|det\left[\frac{\partial f}{\partial x}\right]\right|$$

Calculation is simplified, and logs are respectively solved for both sides of the equation to obtain the following equation. F(x) is the standard flow model needed to be solved, with the equation shown below. Its inverse function G(x) is the generation model. Probability distribution meeting simple distribution can be converted into complex probability distribution.

$$log\, q\,(x) = -\frac{D}{2}log(2\pi) - \frac{1}{2}\|f(x)\|^2 + log\left|det\left[\frac{\partial f}{\partial x}\right]\right|$$

A *f(x)* layer is a block coupling layer which can be likely to be subjected to reversible transformation. Moreover, the absolute value of its Jacobian matrix is easy to solve. The fitting ability of a single coupling layer is weak. A plurality of coupling layers can be integrated to form a more complete generator, with a combinatory continuous transformation equation below.

$$X \xrightarrow{f_1} H_1 \xrightarrow{f_2} H_2 \xrightarrow{f_3} H_3 \,...\, \xrightarrow{f_K} Z$$

$$X \xleftarrow{f_2^{-1}} H_1 \xleftarrow{f_2^{-1}} H_2 \xleftarrow{f_3^{-1}} H_3 \,...\, \xleftarrow{f_K^{-1}} Z$$

where X represents an original probability distribution function of the data, Z represents a probability distribution function of the data after transformation, H represents a probability distribution function in a transformation process, f represents a single block coupling layer, subscripts 1-K represent numbers of times of transformation, and $f^1$ represents an inverse function of f.

*f(x)* is regarded as y. For the inputted *y*, *y* can be divided into forms of $y_a$ and $y_b$. $y_a{'}$ and $y_b{'}$ are intermediate variables. *y'* is a finally outputted result. $s(y_a)$ and $b(y_a)$ are respectively outputs of two reversible neural networks.

$$y_a, y_b = split(y)$$

$$y_a{'} = y_a$$

$$y_b{'} = s(y_a) \odot y_b + b(y_a)$$

$$y' = concat(y_a{'}, y_b{'})$$

With respect to the step S5, the images in the training set are inputted into the normalized flow model, data distribution of all normal images subjected to model transformation, and the maximum values and the minimum values of all transformed feature image pixel values are calculated and are stored. The algorithm designed in the embodiment includes: iterating an optimized model by the training set, and storing the outputted maximum values and the minimum values for test and normal use of the test set. It is known to those of ordinary skill in the art that the steps of using the algorithm in the embodiment for detecting an abnormality with the test set and a pre-processed normal image data set needed to be detected are completely same, and the training of the model previously is the training stage, and the flow diagram of the training stage is shown in FIG. 3.

With respect to the step S6, the flow of the training and testing stages is shown in FIG. 2. A sub-image is arbitrarily selected from the test set, the sub-image is inputted into the feature extraction model and the FastFlow model, and normalization processing is performed on a finally outputted feature graph and the previously calculated maximum values and minimum values to obtain an abnormality score.

With respect to the step S7, the abnormality score is compared with the set threshold to judge whether the image is abnormal; and the abnormality score is compared with the set threshold, the image with the abnormality score greater than the set threshold is an abnormal image, and the image with the abnormality score less than the set threshold is a normal image.

It is to be noted that the testing process is not different from the process of detecting the abnormality by using the algorithm, that is, during normal use after the test, the image to be detected needs to be pre-processed and inputted into the feature extraction model and the FastFlow model, the finally outputted feature diagram and the previously calculated maximum values and minimum values are subjected to normalizing processing to obtain the abnormality score, and the abnormality score is compared with the set threshold to judge whether the image is normal; and the abnormality score is compared with the set thread, the image with the abnormality score greater than the set threshold is the abnormal image, and the image with the abnormality score less than the set threshold is the normal image.

The above is merely the preferred embodiments of the present invention, and is not intended to limit the design of the solution. Equivalent variations made according to a design issue of the solution all shall fall within the scope of protection of the solution.

**Claims**

1. A method for detecting an abnormality of an elongated surface of a case of a blade lithium battery, comprising the following steps:

   S1: acquiring an image of the elongated surface of the blade lithium battery, pre-processing the image into a sub-image, and constructing a data set;
   S2 selecting defected images in the data set as a test set, and selecting normal images as a training set;
   S3: inputting the training set into a feature extraction model to obtain a feature vector;
   S4: inputting the extracted feature vector into a FastFlow model for training to obtain a normalized flow model;
   S5: inputting the images in the training set into the normalized flow model, calculating maximum values and minimum values of all converted feature image pixel values and storing the maximum values and minimum values;
   S6: arbitrarily selecting a sub-image from the test set, inputting the sub-image into the feature extraction model and the FastFlow model, and performing normalization processing on a finally outputted feature graph and the previously calculated maximum values and minimum values to obtain an abnormality score; and
   S7: comparing the abnormality score with a set threshold, and judging whether the image is abnormal;
   wherein the step S1 adopts an adaptive image segmentation method, and the image of the elongated surface of the case of the battery is segmented into a plurality of square sub-images;
   the feature extraction model in the step S3 comprises a deep residual network model ResNet-18 as a backbone network; and
   the FastFlow model adopted in the steps S4 and S6 is constructed based on a normalizing flow model.

2. The method for detecting an abnormality of an elongated surface of a case of a blade lithium battery according to claim 1, wherein in the step S1, the image of the elongated surface of the blade lithium battery is divided into a substantial surface and an elongated side surface, and the substantial surface and the elongated side surface are respectively pre-processed into sub-images, and are used to construct the respective data sets.

3. The method for detecting an abnormality of an elongated surface of a case of a blade lithium battery according to claim 2, wherein defected sub-images are selected from the two data sets constructed in S1 as the test set, and normal images are used as the training set, wherein only normal image samples are used in training.

4. The method for detecting an abnormality of an elongated surface of a case of a blade lithium battery according to claim 1, wherein the boundary of the battery can be separated by a threshold method relating to a distinct boundary between a surface of the case of the battery and an ambient environment; the threshold method comprises: subjecting the image to grayscale processing and converting the image into a grayscale image; setting pixels of a non-battery area as zero according to a boundary threshold; and determining an effective area of the battery based on corresponding pixel values.

5. The method for detecting an abnormality of an elongated surface of a case of a blade lithium battery according to claim 1, wherein the adaptive image segmentation method in the step S1 comprises: creating a sliding window with a height equal to a width of the effective area of the battery; traversing, by the sliding window, a sliding area to calculate a width of an effective area of the battery in the sliding window; taking the width as a height of a next sliding window; and modifying a moving value of the sliding window, and performing continuous iterative traversing until the whole image is traversed.

6. The method for detecting an abnormality of an elongated surface of a case of a blade lithium battery according to claim 5, wherein

an algorithm for calculating the width is as follows:

$$w = w_{r\_i} - w_{l\_i}$$

Where $w_{r\_i}$ represents a coordinate of a first column of x with the pixel value greater than more than 1/3 of a total amount of the boundary thresholds in each column of pixels from right to left in the sliding window, $w_{l\_i}$ represents a coordinate of a first column of x with the pixel value greater than more than 1/3 of a total amount of the boundary thresholds in each column of pixels from left to right in the sliding window, wherein the width of the effective area being obtained by subtracting the two values; whereby the width is used as the height of the next sliding window; and

wherein the method further comprises modifying the moving value of the sliding window such that the height of the sliding widow covers a lower edge of a previous window using the formula:

$$h_{\text{slice}} = w * (1 - e_{\text{overlap}})$$

where h s 1 lce represents a value when the sliding window moves once, and $e_{\text{overlap}}$ represents a proportion at which the previous sliding window is covered, wherein the proportion is set as 0.01.

7. The method for detecting an abnormality of an elongated surface of a case of a blade lithium battery according to claim 6, wherein the method of claim 6 is repeated and iterated to successively traverse the sliding window downwardly to a lower edge of the image to complete pre-processing of the image; wherein a plurality of square-shaped sub-images are generated with an edge of each sub-image equal to the effective width calculated by one sliding window and the height of the next sliding window.

8. The method for detecting an abnormality of an elongated surface of a case of a blade lithium battery according to claim 1, wherein the feature extraction model in the step S3 comprises the deep residual network model ResNet-18 as the backbone network, and outputs of a first network block, a second network block, and only a third network block of the deep residual network model ResNet-18 are used.

9. The method for detecting an abnormality of an elongated surface of a case of a blade lithium battery according to claim 1, wherein in the FastFlow mode used in the steps S4 and S6, a plurality of coupling layers are integrated to form a more complete generator, wherein a combinatory continuous transformation formula of the generator is as follows:

$$X \xrightarrow{f_1} H_1 \xrightarrow{f_2} H_2 \xrightarrow{f_3} H_3 \ldots \xrightarrow{f_K} Z$$

$$X \xleftarrow{f_2^{-1}} H_1 \xleftarrow{f_2^{-1}} H_2 \xleftarrow{f_3^{-1}} H_3 \ldots \xleftarrow{f_K^{-1}} Z$$

where X represents an original probability distribution function of the data, Z represents a probability distribution function of the data after transformation, H represents a probability distribution function in a transformation process, f represents a single block coupling layer, subscripts 1-K represent numbers of times of transformation, and $f^1$ represents an inverse function of f.

10. The method for detecting an abnormality of an elongated surface of a case of a blade lithium battery according to claim 1, wherein in the step S6, a sub-image is arbitrarily selected from the test set, the sub-image is inputted into the feature extraction model and the FastFlow model, and normalization processing is performed on the finally outputted feature graph and the previously calculated maximum values and minimum values to obtain the abnormality score.

11. The method for detecting an abnormality of an elongated surface of a case of a blade lithium battery according to claim 9, wherein in the step S7, the abnormality score is compared with the set threshold to judge whether the image is abnormal; and the abnormality score is compared with the set threshold, the image with the abnormality score greater than the set threshold is an abnormal image, and the image with the abnormality score less than the set threshold is a normal image.

Acquire an image of the elongated surface of the blade lithium battery, pre-process the image into a sub-image, and construct a data set → S1

Select defected images in the data set as a test set, and select normal images as a training set → S2

Input the training set into a feature extraction model to obtain a feature vector → S3

Input the extracted feature vector into a FastFlow model for training to obtain a normalized flow model → S4

Input the images in the training set into the normalized flow model, calculate maximum values and minimum values of all converted feature image pixel values and store the maximum values and minimum values → S5

Arbitrarily select a sub-image from the test set, inputting the sub-image into the feature extraction model and the FastFlow model, and perform normalization processing on a finally outputted feature graph and the previously calculated maximum values and minimum values to obtain an abnormality score → S6

Compare the abnormality score with a set threshold, and judge whether the image is abnormal → S7

FIG. 1

**Training stage**

All images → Sub-image → Feature extractor → Normalizing flow model → Record maximum values and minimum values of all feature distributions

- - - - - - - - - - - - - - - - - - - - - - - - - - - - - - - - - - - -

**Test stage**

Single image → Sub-image → Feature extractor → Normalizing flow model → Normalize an outputted result according to the maximum values and the minimum values

FIG. 2

3*224*224

| Input layer |
64*112*112

| First network block |
64*56*56

| Second network block |
128*28*28

| Third network block |
256*14*14

| Fourth network block |
512*7*7

| Output layer |

Network block

| Residual block |
↓
| Residual block |

x

Residual block

f(x)   x

⊕

f(x)+x

FIG. 3

Sub-image 1

Sub-image 2

Sub-image 3

•
•
•

Sub-image n

Model

Feature diagram 1

Feature diagram 2

Feature diagram 3

•
•
•

Feature diagram n

| Pixel maximum value |
| Pixel minimum value |

FIG. 4

## INTERNATIONAL SEARCH REPORT

| | International application No. |
|---|---|
| | **PCT/CN2024/076285** |

| A. | CLASSIFICATION OF SUBJECT MATTER |
|---|---|

G06T7/00(2017.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, VEN, ENTXTC, CJFD, Microsoft Bing, CNKI: 刀片, 电池, 缺陷, 异常, 训练, 样本, 正常, 测试, 归一化流模型, 自适应, 图像, 分割, 子图像, 正方形, 滑动, 窗口, 滑窗, blade, battery, flaw, abnormal, train, sample, normal, test, , FastFlow, self, adaption, image, segment, subimage, square, slide, window, ResNet.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116188467 A (XIAMEN WEITU SOFTWARE TECHNOLOGY CO., LTD.) 30 May 2023 (2023-05-30) <br> claims 1-5, and description, paragraphs 0015-0019 | 1-10 |
| Y | YU, Jianwei et al. "FastFlow: Unsupervised Anomaly Detection and Localization via 2D Normalizing Flows" <br> *Computer Science Computer Vision and Pattern Recognition*, <br> 16 November 2021 (2021-11-16), <br> abstract, and sections 2-4 | 1-5, 7-10 |
| Y | CN 115290696 A (CHONGQING UNIVERSITY) 04 November 2022 (2022-11-04) <br> description, paragraphs 0013-0019 | 1-5, 7-10 |
| A | CN 114049332 A (SHANGHAI SENSETIME INTELLIGENT TECHNOLOGY CO., LTD.) 15 February 2022 (2022-02-15) <br> entire document | 1-10 |
| A | CN 115393714 A (FUZHOU UNIVERSITY) 25 November 2022 (2022-11-25) <br> entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 April 2024** | **09 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076285**

| Patent document cited in search report | | | Publication date (day/month/year) | Patent family member(s) | | | Publication date (day/month/year) |
|---|---|---|---|---|---|---|---|
| CN | 116188467 | A | 30 May 2023 | CN | 116188467 | B | 25 July 2023 |
| CN | 115290696 | A | 04 November 2022 | WO | 2024027009 | A1 | 08 February 2024 |
| CN | 114049332 | A | 15 February 2022 | HK | 40062793 | A0 | 17 June 2022 |
| | | | | WO | 2023087636 | A1 | 25 May 2023 |
| CN | 115393714 | A | 25 November 2022 | | None | | |

Form PCT/ISA/210 (patent family annex) (July 2022)